(19) Europäisches Patentamt
European Patent Office
Office européen des brevets

(11) **EP 4 458 884 A1**

(12) **EUROPEAN PATENT APPLICATION**
published in accordance with Art. 153(4) EPC

(43) Date of publication:
**06.11.2024 Bulletin 2024/45**

(21) Application number: 23894877.2

(22) Date of filing: **06.11.2023**

(51) International Patent Classification (IPC):
*C08J 3/24* (2006.01)    *C08J 3/12* (2006.01)
*C08J 3/075* (2006.01)    *C08J 3/20* (2006.01)
*C08K 3/22* (2006.01)    *C08K 3/34* (2006.01)
*C08K 3/36* (2006.01)    *C08L 33/00* (2006.01)

(52) Cooperative Patent Classification (CPC):
**C08J 3/075; C08J 3/12; C08J 3/20; C08J 3/24;
C08K 3/22; C08K 3/34; C08K 3/36; C08L 33/00**

(86) International application number:
**PCT/KR2023/017661**

(87) International publication number:
**WO 2024/111948 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2022 KR 20220159758
03.11.2023 KR 20230150812**

(71) Applicant: **LG Chem, Ltd.
Yeongdeungpo-gu
Seoul 07336 (KR)**

(72) Inventors:
• **YOON, Hyungki
Daejeon 34122 (KR)**
• **JU, Jin Hyuck
Daejeon 34122 (KR)**
• **SHIN, Kwangin
Daejeon 34122 (KR)**
• **AHN, Taebin
Daejeon 34122 (KR)**

(74) Representative: **Plasseraud IP
104 Rue de Richelieu
CS92104
75080 Paris Cedex 02 (FR)**

(54) **SUPERABSORBENT POLYMER AND PREPARATION METHOD THEREFOR**

(57)    The present disclosure relates to super absorbent polymer that are excellent in all properties including centrifuge retention capacity, absorption under pressure, vortex time, 1min tap water free absorbency, and rewet property, and thus, can exhibit high absorption performance and excellent use feel when used in hygiene products such as diapers, and the like, and a method for preparing the same.

EP 4 458 884 A1

**Description**

[Technical Field]

Cross-Reference to Related Application(s)

This application claims the benefit of Korean Patent Application No. 10-2022-0159758 filed on November 24, 2022 and Korean Patent Application No. 10-2023-0150812 filed on November 3, 2023 with the Korean Intellectual Property Office, the disclosures of which are herein incorporated by reference in their entirety.

The present disclosure relates to super absorbent polymer that simultaneously has high absorption speed and excellent centrifuge retention capacity and absorption under pressure, and has excellent rewet prevention and leakage inhibition properties, and a preparation method thereof.

[Background Art]

Super absorbent polymer (SAP) is synthetic polymer material that can absorb moisture of 500 to 1000 times of self-weight, and is also named differently as super absorbency material (SAM), absorbent gel material (AGM), etc. according to developing companies. The superabsorbent polymer began to be commercialized as sanitary items, and currently, it is being widely used as water-holding material for soil, water stop material for civil engineering and architecture, sheets for raising seedling, freshness preservatives in the field of food circulation, fomentation material, etc.

Such superabsorbent polymer is being widely used in the field of hygienic goods such as diapers or sanitary pad, and the like. In the hygienic goods, the superabsorbent polymer is generally spread in pulp and included. However, recently, in an effort to provide hygienic goods such as diapers having thinner thickness, development of diapers having decreased pulp content, or even pulpless diapers in which pulp is not used at all, is being actively progressed.

In order to be widely used for such hygienic goods, super absorbent polymer is required to exhibit high absorbency to moisture and rapid vortex time, and the absorbed moisture should not escape even under external pressure, and besides, it should properly maintain the shape even when it absorbs water and the volume is expanded (swollen), thus exhibiting excellent permeability.

Meanwhile, after super absorbent polymer applied to hygienic goods absorbs liquid, if a pressure by the weight of a user is applied, rewet phenomenon wherein liquid absorbed in the super absorbent polymer is partially exuded, and leakage of urine may occur, and thus, there is a demand for development of super absorbent polymer in which rewet and leakage are inhibited.

However, vortex time, centrifuge retention capacity and absorption under pressure are conflicting properties, and if high foam polymerization is conducted so as to increase vortex time, the strength of a polymer core may become weak, and thus, centrifuge retention capacity and absorption under pressure may be deteriorated. Further, if a crosslinking density of super absorbent polymer is increased, although absorption under pressure may be improved, centrifuge retention capacity or vortex time may be deteriorated, and thus, it was difficult to simultaneously improve vortex time, centrifuge retention capacity and absorption under pressure, and the like.

Thus, there is a demand for development of super absorbent polymer that are excellent in all properties of absorption under pressure, centrifuge retention capacity, and vortex time, and simultaneously, can improve rewet prevention property and leakage prevention property of hygienic goods such as a diaper, and the like.

[Disclosure of Invention]

[Technical Problem]

It is an object of the present disclosure to provide super absorbent polymer that simultaneously meets required properties of centrifuge retention capacity, absorption under pressure, vortex time, and 1 min tap water free absorbency, and has rewet and leakage prevention property.

[Technical Solution]

According to one embodiment of the present disclosure, there is provided super absorbent polymer wherein

i) centrifuge retention capacity is 30g/g or more,
ii) effective absorption capacity (EFFC, 0.3psi) calculated by the following Formula 1 is greater than 29.5g/g,
iii) a vortex time by a vortex method is less than 37 seconds,
iv) 1 min tap water free absorbency is greater than 115g, said 1 min tap water free absorbency being defined as the weight of water absorbed in super absorbent polymer for 1 minute, when 1g of the super absorbent polymer is soaked in 2L of tap water and swollen for 1 minute,

v) rewet property (brine 2 hour rewet under pressure) is less than 3.7g, said rewet property being defined as the weight of water exuded from super absorbent polymer to a filer paper, after 4g of the super absorbent polymer is soaked in 100g of 0.9 wt% sodium chloride aqueous solution and swollen for 120 minutes, and then, the filter paper is put on the super absorbent polymer and pressurized with 0.75psi for 5 minutes, Effective absorption capacity (EFFC, 0.3 psi) = {centrifuge retention capacity (CRC) + 0.3psi absorption under pressure(AUP)}/2     [Formula 1]

According to one embodiment of the present disclosure, there is also provided a method for preparing the super absorbent polymer, comprising steps of:

preparing a monomer composition comprising acrylic acid-based monomers having at least partially neutralized acid groups, an internal crosslinking agent, and a polymerization initiator;
subjecting the monomer composition to crosslinking polymerization to form hydrogel polymer;
drying, grinding and classifying the hydrogel polymer to form base resin; and
forming a surface crosslink layer on the surface of the base resin, in the presence of a surface crosslinking solution comprising a surface crosslinking agent, water and an organic solvent having a boiling point less than 90°C, wherein the weight ratio of water/organic solvent of the surface crosslinking solution is 1.0 or more to less than 3.0, and the content of the organic solvent in the surface crosslinking solution is 24 wt% or more.

Effects

The super absorbent polymer of the present disclosure is excellent in all properties including centrifuge retention capacity, absorption under pressure, vortex time, 1min tap water free absorbency, and rewet property, and thus, may exhibit improved rewet and leakage prevention property, as well as rapid vortex time and high absorbency.

[Best Mode for Carrying Out the Invention]

The terms used herein are only to explain specific embodiments, and are not intended to limit the present disclosure. A singular expression includes a plural expression thereof, unless the context clearly indicates otherwise. Throughout the specification, the terms "comprise", "equipped" or "have", etc. are intended to designate the existence of practiced characteristic, number, step, constructional element or combinations thereof, and they are not intended to preclude the possibility of existence or addition of one or more other characteristics, numbers, steps, constructional elements or combinations thereof.

Although various modifications can be made to the present disclosure and the present disclosure may have various forms, specific examples will be illustrated and explained in detail below. However, it should be understood that they are not intended to limit the present disclosure to specific disclosure, and that the present disclosure includes all the modifications, equivalents or replacements thereof without departing from the spirit and technical scope of the present disclosure.

Technical terms used herein are only for mentioning specific embodiments, and they are not intended to restrict the present disclosure. The singular expressions used herein may include the plural expressions unless the context clearly indicates otherwise.

As used herein, the term "polymer" means a polymerized state of acrylic acid-based monomers (water soluble ethylenically unsaturated monomers), and may include polymers of all moisture content ranges or all particle diameter ranges. Among the polymers, polymer after polymerization and drying, having a moisture content of about 40 wt% or more, may be referred to as hydrogel polymer, and ground and dried particles of such hydrogel polymer may be referred to as crosslinked polymer.

Further, the term "super absorbent polymer particle" refers to particulate matter comprising crosslinked polymer that is polymerized from acrylic acid-based monomers comprising acid groups, at least a part of said acid groups being neutralized, and is crosslinked by an internal crosslinking agent.

Further, the term "super absorbent polymer" is used to include crosslinked polymer polymerized from acrylic acid-based monomers comprising acid groups, at least a part of said acid groups being neutralized, or base resin in the form of powder consisting of ground particles of the crosslinked polymer, or the crosslinked polymer or base resin made suitable for productization through additional processes, for example, surface crosslinking, fine particle reassembly,

3

drying, grinding, classification, and the like, according to the context. Thus, the term "super absorbent polymer" may be interpreted as including plural super absorbent polymer particles.

Super absorbent polymer used in hygienic goods such as a diaper, and the like, should exhibit high absorbency to moisture, and have excellent absorbency under pressure so that the absorbed moisture should not escape even under external pressure, and simultaneously, it should have high vortex time so as to rapidly absorb liquid.

Thus, in the present disclosure, there are provided super absorbent polymer that is excellent in all properties including centrifuge retention capacity, absorption under pressure, vortex time, 1 min tap water free absorbency, and rewet property, and a preparation method thereof.

Specifically, super absorbent polymer according to one embodiment of the present disclosure meets all of the following properties of i) to v), thus exhibiting excellent vortex time, absorbency, rewet and leakage prevention performance:

i) centrifuge retention capacity is 30g/g or more,
ii) effective absorption capacity (EFFC, 0.3psi) calculated by the following Formula 1 is greater than 29.5g/g,
iii) a vortex time by a vortex method is less than 37 seconds,
iv) 1 min tap water free absorbency is greater than 115g, said 1 min tap water free absorbency being defined as the weight of water absorbed in super absorbent polymer for 1 minute, when 1g of the super absorbent polymer is soaked in 2L of tap water and swollen for 1 minute,
v) rewet property (brine 2 hour rewet under pressure) is less than 3.7g, said rewet property being defined as the weight of water exuded from super absorbent polymer to a filer paper, after 4g of the super absorbent polymer is soaked in 100g of 0.9 wt% sodium chloride aqueous solution and swollen for 120 minutes, and then, the filter paper is put on the super absorbent polymer and pressurized with 0.75psi for 5 minutes, Effective absorption capacity (EFFC, 0.3psi) = {centrifuge retention capacity(CRC) + 0.3psi absorption under pressure(AUP)}/2     [Formula 1]

In general, super absorbent polymer having rapid vortex time by a vortex method is prepared by polymerizing monomers in the presence of an internal crosslinking agent and a blowing agent to form a porous structure. However, in this case, a crosslinking density is lowered, and thus, centrifuge retention capacity and absorption under pressure are deteriorated.

Thus, in order to complement internal crosslinking density lowered due to foam polymerization, a method of increasing surface crosslinking density has been previously used. However, in case a surface crosslinking degree is high compared to an internal crosslinking degree, a swelling capacity of the surface of super absorbent polymer is lowered, and thus, centrifuge retention capacity decreases. Further, in case super absorbent polymer is excessively swollen, a surface-crosslinked part may be torn and base resin inside may be exposed, and thus, rewet may occur.

Thus, the inventors of the present disclosure repeated researches for providing super absorbent polymer simultaneously meeting properties of centrifuge retention capacity, EFFC, vortex time, 1 min tap water free absorbency, rewet, and the like, and as the result, confirmed that by controlling the internal crosslinking density and surface crosslinking density of base resin, the above required properties may be simultaneously met, and completed the present disclosure. Namely, the super absorbent polymer of the present disclosure has little difference between internal crosslinking density and surface crosslinking density of base resin, and thus, when moisture is absorbed, the surface may be properly swollen, and thus, centrifuge retention capacity and absorption under pressure may be simultaneously improved, and vortex time is also high.

The centrifuge retention capacity (CRC) of the super absorbent polymer may be, for example, 30 g/g or more, or 31 g/g or more, or 32 g/g or more. The upper limit of centrifuge retention capacity is not theoretically limited, but for example, it may be 40 g/g or less, or 38 g/g or less, or 35 g/g or less.

The effective absorption capacity (EFFC) is the arithmetic mean value of centrifuge retention capacity (CRC) and 0.3 psi absorption under pressure (AUP). The super absorbent polymer of one embodiment of the present disclosure may have EFFC greater than 29.5 g/g, or greater than 30 g/g, or greater than 30.5 g/g, and 40 g/g or less, or 38 g/g or less, or 35 g/g or less.

Meanwhile, 0.3 psi absorption under pressure (AUP) of the super absorbent polymer may be specifically in the range of 25 g/g or more, or 27 g/g or more, or 29 g/g or more, or 30 g/g or more, or 31 g/g or more, and 40 g/g or less, or 38 g/g or less, or 35 g/g or less.

The vortex time by a vortex method of the super absorbent polymer may be less than 37 seconds, and it may be 35 seconds or less, or 32 seconds or less, or 30 seconds or less, or 29 seconds or less. As the vortex time is more rapid, it is more excellent, and the lower limit is not limited, but for example, it may be 10 seconds or more, or 15 seconds or more, or 20 seconds or more, or 25 seconds or more.

1 min tap water free absorbency of the super absorbent polymer may be greater than 115 g, greater than 125 g, greater than 130 g, or greater than 133 g or more, and 200 g or less, or 190 g or less, or 180 g or less.

The tap water used to measure 1 min tap water free absorbency has electrical conductivity of 170 to 180 $\mu$S/cm. Since the electrical conductivity of tap water has an influence on measured properties, the properties should be measured using tap water having equivalent level of electrical conductivity.

The super absorbent polymer may meet v) rewet property (brine 2 hour rewet under pressure) being less than 3.7g, said rewet property being defined as the weight of water exuded from super absorbent polymer to a filer paper, after 4g of the super absorbent polymer is soaked in 100g of 0.9 wt% sodium chloride aqueous solution and swollen for 120 minutes, and then, the filter paper is put on the super absorbent polymer and pressurized with 0.75psi for 5 minutes. Preferably, the weight of water may be 3.4g or less, 3.2g or less, or 3.0g or less, or 2.7g or less. The smaller the rewet amount, more excellent the rewet property, and the weight of water may be theoretically 0g, and for example, it may be 0.1g or more, or 0.2g or more, or 0.3g or more.

Measurement methods of the centrifuge retention capacity, absorption under pressure, vortex time, 1 min tap water free absorbency, and rewet property will be specifically explained in examples described later.

As explained above, the super absorbent polymer according to one embodiment of the present disclosure exhibits high centrifuge retention capacity, EFFC, and 1 min tap water free absorbency, and simultaneously, exhibits rapid vortex time, and thus, may be suitable used in the field of hygienic goods requiring rewet and leakage prevention property and high absorption speed.

Meanwhile, the super absorbent polymer may be prepared by a preparation method comprising steps of:

> preparing a monomer composition comprising acrylic acid-based monomers having at least partially neutralized acid groups, an internal crosslinking agent, and a polymerization initiator;
> subjecting the monomer composition to crosslinking polymerization to form hydrogel polymer;
> drying, grinding and classifying the hydrogel polymer to form base resin; and
> forming a surface crosslink layer on the surface of the base resin, in the presence of a surface crosslinking solution comprising a surface crosslinking agent, water and an organic solvent having a boiling point less than 90°C,
> wherein the weight ratio of water/organic solvent of the surface crosslinking solution is 1.0 or more to less than 3.0, and the content of the organic solvent in the surface crosslinking solution is 24 wt% or more.

Hereinafter, a preparation method of super absorbent polymer according to specific embodiments of the present disclosure will be explained in detail according to steps.

**(Step 1)**

In the preparation method according to one embodiment, step 1 prepares a monomer composition comprising acrylic acid-based monomers having acid groups, at least a part of said acid groups being neutralized, an internal crosslinking agent, and a thermal polymerization initiator.

The acrylic acid-based monomer is a compound represented by the following Chemical Formula 1:

> [Chemical Formula 1]  $R^1$-COOM$^1$

In the Chemical Formula 1,

$R^1$ is a C2-5 alkyl group comprising an unsaturated bond,
$M^1$ is a hydrogen atom, a monovalent or divalent metal, an ammonium group or an organic amine salt.

Preferably, the acrylic acid-based monomers include one or more selected from the group consisting of acrylic acid methacrylic acid, and monovalent metal salts, divalent metal salts, ammonium salts and organic amine salts thereof.

Wherein, the acrylic acid-based monomers have acid groups, and at least a part of the acid groups may be neutralized. Preferably, the monomers may be partially neutralized with an alkali substance such as sodium hydroxide, potassium hydroxide, ammonium hydroxide, and the like, before use. Wherein, the degree of neutralization of the monomer may be 40 to 95 mol%, or 40 to 80 mol%, or 45 to 75 mol%. Although the range of the neutralization degree may vary according to the final properties, if the neutralization degree is too high, neutralized monomers may be precipitated, and thus, it may be difficult to smoothly progress polymerization, and to the contrary, if the neutralization degree is too low, absorption force of the polymer may be significantly lowered, and it may exhibit elastic rubber-like properties, which is difficult to handle.

The concentration of the acrylic acid-based monomers may be controlled to about 20 to about 60 wt%, preferably about 40 to 50 wt%, and may be appropriately controlled considering polymerization time and reaction conditions, and the like. However, if the concentration of the monomers is too low, yield of super absorbent polymer may be low, and there may be a problem with economics, and to the contrary, if the concentration is too high, a part of the monomers may be precipitated, or during grinding of polymerized hydrogel polymer, grinding efficiency may be low, and thus, there may be a process problem, and the properties of super absorbent polymer may be deteriorated.

As used herein, the term 'internal crosslinking agent' is used to distinguish from a surface crosslinking agent for crosslinking the surface of super absorbent polymer particles described later, and it functions for crosslinking unsaturated bonds of the above-explained water soluble ethylenically unsaturated monomers, to polymerize. In this step, crosslinking is progressed without distinction of a surface and inside, but in case a surface crosslinking process of super absorbent polymer is progressed as described later, the surface of the finally prepared super absorbent polymer particles may include a structure crosslinked by the surface crosslinking agent, and the inside of the super absorbent polymer particles may consist of a structure crosslinked by the internal crosslinking agent.

As the internal crosslinking agent, any compounds can be used as long as they enable crosslinking during polymerization of the acrylic acid-based monomers. Specifically, as the internal crosslinking agent, crosslinking agents having one or more functional groups capable of reacting with water soluble substituents of the acrylic acid-based unsaturated monomers, and having one or more ethylenically unsaturated groups; or crosslinking agents having two or more functional groups capable of reacting with water soluble substituents of the monomers and/or water soluble substituents formed hydrolysis of the monomers, may be used.

As non-limiting examples as the internal crosslinking agent, multi-functional crosslinking agents such as acrylate-based compounds such as N,N'-methylenebisacrylamide, trimethylpropane tri(meth)acrylate, ethyleneglycol di(meth)acrylate, polyethyleneglycol(meth)acrylate, polyethyleneglycol di(meth)acrylate, propyleneglycol di(meth)acrylate, polypropyleneglycol(meth)acrylate, butanedioldi(meth)acrylate, butyleneglycol di(meth)acrylate, diethyleneglycol di(meth)acrylate, hexanediol di(meth)acrylate, triethyleneglycol di(meth)acrylate, tripropyleneglycol di(meth)acrylate, tetraethyleneglycol di(meth)acrylate, dipentaerythritol pentaacrylate, glycerin tri(meth)acrylate, pentaerythritol tetraacrylate, allyl (meth)acrylate, and the like; epoxy-based compounds such as ethyleneglycol diglycidyl ether, diethyleneglycol diglycidyl ether, polyethyleneglycol diglycidyl ether, propyleneglycol diglycidyl ether, tripropyleneglycol diglycidyl ether, polypropyleneglycol diglycidyl ether, neopentylglycol diglycidyl ether, 1,6-hexanediol diglycidyl ether, polytetramethyleneglycol diglycidyl ether, glycerol diglycidyl ether, glycerol triglycidyl ether, diglycerol polyglycidyl ether, polyglycerol polyglycidyl ether, and the like; triarylamine; propylene glycol; glycerin; or ethylene carbonate may be used alone or in combinations of two or more kinds, but the present disclosure is not limited thereto.

In the monomer composition, the internal crosslinking agent may be used in an amount of 0.01 to 5 parts by weight, based on 100 parts by weight of acrylic acid-based monomers. For example, the internal crosslinking agent may be used in the amount of 0.01 parts by weight or more, 0.05 parts by weight or more, 0.1 parts by weight, or 0.15 parts by weight or more, and 5 parts by weight or less, 3 parts by weight or less, 2 parts by weight or less, 1 part by weight or less, or 0.7 parts by weight or less, based on 100 parts by weight of water soluble ethylenically unsaturated monomers. If the content of the internal crosslinking agent is too low, crosslinking may not sufficiently occur, and thus, it may be difficult to realize strength above an optimum level, and if the content of the internal crosslinking agent is too high, internal crosslinking density may increase, and thus, it may be difficult to realize desired water retention capacity.

Further, the monomer composition may further comprise a polymerization initiator for initiating a polymerization reaction of the monomers, and the polymerization initiator is not specifically limited as long as it is generally used for preparation of a super absorbent polymer.

Specifically, polymerization is progressed by thermal polymerization or photopolymerization, and even when photopolymerization is progressed, since a certain amount of heat is generated by UV irradiation, etc., and heat is generated to some degree according to the progression of an exothermic polymerization reaction, a photopolymerization initiator and a thermal polymerization initiator may be used together.

According to one embodiment, as the thermal polymerization initiator, one or more selected from the group consisting of a persulfate initiator, an azo initiator, hydrogen peroxide, and ascorbic acid may be used. Specific examples of the persulfate initiator may include sodium persulfate ($Na_2S_2O_8$), potassium persulfate ($K_2S_2O_8$), ammonium persulfate (($NH_4)_2S_2O_8$), etc., and, specific examples of the azo initiator may include 2,2-azobis(2-amidinopropane)dihydrochloride, 2,2-azobis-(N,N-dimethylene)isobutyramidinedihydrochloride, 2-(carbamoylazo)isobutyronitril, 2,2-azobis[2-(2-imidazolin-2-yl)propane]dihydrochloride, 4,4-azobis-(4-cyanovalericacid), etc. More various thermal initiators are described in "Principle of Polymerization (Wiley, 1981)", Odian, page 203, but the thermal initiators are not limited thereto.

More specifically, the thermal polymerization initiator may comprise a persulfate compound. For example, as the thermal polymerization initiator, sodium persulfate (SPS; $Na_2S_2O_8$) may be used.

The thermal polymerization initiator may be used in the amount of 0.05 to 0.25 parts by weight, based on 100 parts by weight of the acrylic acid-based monomers. If the content of the thermal polymerization initiator is less than 0.05 parts by weight, a polymerization speed may become slow, and additional radical initiation reaction according to the reaction with a reducing agent may not be sufficiently induced, and thus, it may be difficult to decrease residual monomer content, and if the content of the thermal polymerization initiator is greater than 0.25 parts by weight, extractable content may increase, and thus, there is a concern about rewet of super absorbent polymer.

Further, the monomer composition may further comprise a photopolymerization initiator. The photopolymerization is not limited as long as it can form radicals by light such as UV.

As the photopolymerization initiator, for example, one or more selected from the group consisting of benzoin ether, dialkyl acetophenone, hydroxyl alkylketone, phenyl glyoxylate, benzyl dimethyl ketal, acyl phosphine and $\alpha$-aminoketone may be used. Among them, as specific examples of the acyl phosphine, commercially available lucirin TPO, i.e., diphenyl(2,4,6-trimethylbenzoyl)phosphine oxide may be used. More various photoinitiators are described in Reinhold Schwalm, " UV Coatings: Basics, Recent Developments and New Application(Elsevier 2007) " p. 115, and are not limited to the above-explained examples.

The photopolymerization initiator may be used in the amount of 0.001 to 0.010 parts by weight, based on 100 parts by weight of the acrylic acid-based monomers. If the concentration of the photopolymerization initiator is too low, a polymerization speed may become slow, and if the concentration of the photopolymerization initiator is too high, molecular weight of super absorbent polymer may become small and the properties may become non-uniform.

The monomer composition may further comprise additives such as a thickener, a plasticizer, a preservation stabilizer, an anti-oxidant, and the like, as necessary.

Further, the monomer composition comprising monomers may be, for example, in the state of a solution dissolved in a solvent such as water, and solid content in the monomer composition solution, namely, the concentration of monomers, internal crosslinking agent and polymerization initiator may be appropriately controlled considering polymerization time and reaction conditions, and the like. For example, solid content in the monomer composition may be 10 to 80 wt%, or 15 to 60 wt%, or 30 to 50 wt%.

In case the monomer composition has solid content of the above range, by gel effect appearing in the polymerization reaction of an aqueous solution of high concentration, there will be no need to remove unreacted monomers after polymerization, and simultaneously, it may be advantageous for control of grinding efficiency during grinding of polymer as described later.

Wherein, the solvent that can be used is not limited in terms of its construction as long as it can dissolve the above explained components. For example, as the solvent, water, ethanol, ethyleneglycol, diethyleneglycol, triethyleneglycol, 1,4-butanediol, propyleneglycol, ethyleneglycol monobutyl ether, propyleneglycol monomethyl ether, propyleneglycol monomethyl ether acetate, methylethylketone, acetone, methylamylketone, cyclohexanone, cyclopentanone, diethyleneglycol monomethyl ether, diethyleneglycol ethyl ether, toluene, xylene, butyrolactone, carbitol, methylcellosolve acetate, N,N-dimethylacetamide, or a mixture thereof may be used.

**(Step 2)**

Next, the monomer composition is subjected to crosslinking polymerization to prepare hydrogel polymer.

The polymerization method of the monomer composition is not specifically limited as long as it is a commonly used polymerization method.

Specifically, the polymerization method is largely classified into thermal polymerization and photopolymerization according to the kind of energy source, and thermal polymerization may be progressed in a reactor equipped with a stirring axis such as a kneader, and photopolymerization may be progressed in a reactor equipped with a movable conveyer belt, but the above-explained polymerization methods are no more than examples, and the present disclosure is not limited thereto.

For example, a hydrogel polymer may be obtained by injecting the above-described monomer composition into a reactor such as a kneader equipped with a stirring axis, and supplying hot air or heating the reactor to progress thermal polymerization. Wherein, the hydrogel polymer discharged to the outlet of the reactor may be in the size of a few centimeters to a few millimeters according to the shape of the stirring axis equipped in the reactor. Specifically, the size of obtained hydrogel polymer may vary according to the concentration of the injected monomer composition and the injection speed, etc., and commonly, a hydrogel polymer with particle diameter of 2 to 50 mm may be obtained.

Further, in case photopolymerization of the monomer composition is progressed in a reactor equipped with a movable conveyer belt as explained above, a hydrogel polymer in the form of a sheet having a width of the belt may be obtained. Wherein, the thickness of the sheet may vary according to the concentration of the injected monomer composition and the injection speed, but commonly, it is preferable to feed the monomer composition such that the thickness of a sheet having a thickness of about 0.5 to 5 cm may be obtained. If a monomer composition is fed such that the thickness of sheet polymer is too thin, production efficiency may be low, and if the thickness of sheet polymer is greater than 5 cm, due to too large a thick thickness, a polymerization reaction may not occur over the entire thickness.

Meanwhile, in order to improve absorption speed of a super absorbent polymer, during the crosslinking polymerization of the monomer composition, a blowing agent capable of introducing a porous structure in the super absorbent polymer may be additionally used. As the blowing agent, compounds capable of generating foams in the polymerization step may be used without limitations, but for example, carbonate-based blowing agents or encapsulated blowing agents may be used.

As the carbonate-based blowing agent, for example, one or more selected from the group consisting of sodium bicarbonate, sodium carbonate, potassium bicarbonate, potassium carbonate, calcium bicarbonate, calcium bicarbonate, magnesium bicarbonate and magnesium carbonate may be used.

Specifically, the carbonate-based blowing agent may be used in the content of 0.005 parts by weight to 1 part by weight, based on 100 parts by weight of the acrylic acid-based monomers. If the content of the blowing agent is less than 0.005 parts by weight, function as a blowing agent may be insignificant, and if the content of the blowing agent is greater than 1 part by weight, there will be too many pores in the crosslinked polymer, and thus, gel strength of super absorbent polymer prepared may be lowered, and density may decrease, thus causing distribution and storage problems.

Further, as the encapsulated blowing agent, a thermally expandable microcapsule blowing agent having a core-shell structure may be used. More specifically, the encapsulated blowing agent has a core-shell structure including a core comprising hydrocarbon, and a shell consisting of thermoplastic resin, formed on the core. Specifically, hydrocarbon making up the core is liquid hydrocarbon having low boiling point, and may be easily vaporized by heat. Thus, in case heat is applied to the encapsulated blowing agent, thermoplastic resin making up the shell is softened, and simultaneously, liquid hydrocarbon of the core is vaporized, and the capsule expands with increase in the pressure inside the capsule, and thus, foam with increased size than the existing size is formed.

The hydrocarbon making up the core of the encapsulated blowing agent may be one or more selected from the group consisting of n-propane, n-butane, iso-butane, cyclobutane, n-pentane, iso-pentane, cyclopentane, n-hexane, iso-hexane, cyclohexane, n-heptane, iso-heptane, cycloheptane, n-octane, iso-octane, and cyclooctane. Among them, C3-5 hydrocarbon (n-propane, n-butane, iso-butane, cyclobutane, n-pentane, iso-pentane, cyclopentane) is suitable for the formation of pores of the above-explained size, and iso-butane may be most suitable.

Further, the thermoplastic resin making up the shell of the encapsulated blowing agent may be polymer formed from one or more monomers selected from the group consisting of (meth)acrylate-based compounds, (meth)acrylonitrile-based compounds, aromatic vinyl compounds, vinyl acetate compounds, and vinyl halide compounds. Among them, copolymer of (meth)acrylate and (meth)acrylonitrile may be most suitable for the formation of pores of the above-explained size.

Further, such an encapsulated blowing agent has a structure including a core comprising hydrocarbon and a shell surrounding the core and formed of thermoplastic resin, and it may have an average diameter before expansion of 5 to 30 $\mu$m, and maximum expansion ratio in the air of 5 to 15 times.

The encapsulated blowing agent may be used in the content of 0.005 parts by weight to 1 part by weight, based on 100 parts by weight of the acrylic acid-based monomers. If the content of the blowing agent is less than 0.005 parts by weight, function as a blowing agent may be insignificant, and if the content of the blowing agent is greater than 1 part by weight, there will be too many pores in the crosslinked polymer, and thus, gel strength of super absorbent polymer prepared may be lowered, and density may decrease, thus causing distribution and storage problems.

Further, in the step 2, a surfactant commonly used as a foam stabilizer may be further added along with the carbonate-based blowing agent. As examples of the surfactant, alkyl sulfate-based compounds, polyoxyethylene alkylether-based compounds, and the like may be mentioned. As examples of the alkyl sulfate-based compounds, sodium dodecyl sulfate, ammonium lauryl sulfate, sodium lauryl ether sulfate, or sodium myreth sulfate, and the like may be mentioned, and as examples of the polyoxyethylene alkylether-based compounds, polyoxyethylene lauryl ether, and the like may be mentioned. Wherein, the alkyl sulfate-based compound corresponds to anionic surfactant, and the polyoxyethylene alkylether-based compound corresponds to non-ionic surfactant.

The hydrogel polymer thus obtained may have a moisture content of 40 to 80 wt%. Wherein, the "moisture content" is the content of moisture occupied based on the total weight of hydrogel polymer, and it means a value obtained by subtracting the weight of polymer of a dry state from the weight of hydrogel polymer. Specifically, it is defined as a value calculated by measuring the weight loss according to moisture evaporation in the polymer while raising the temperature of polymer through infrared heating to dry. Wherein, the temperature is raised from room temperature to about 180°C and then maintained at 180°C, and the total drying time may be set to 20 minutes including a temperature raising step of 5 minutes.

**(Step 3)**

Next, the hydrogel polymer is dried, ground and classified to form base resin.

Meanwhile, before drying the hydrogel polymer, a step of coarse grinding of the hydrogel polymer may be additionally conducted. The kind of grinders used for coarse grinding is not specifically limited, but specifically, it may include anyone selected from the group consisting of vertical pulverizer, turbo cutter, turbo grinder, rotary cutter mill, cutter mill, disc mill, shred crusher, crusher, chopper and disc cutter, but is not limited thereto.

Wherein, the coarse grinding step may be conducted such that the particle diameter of the hydrogel polymer may become about 1 mm to about 10 mm. Grinding to particle diameter less than 1 mm would not be technically easy due to high moisture content of hydrogel polymer, and it may cause aggregation between ground particles. Meanwhile, if grinding to particle diameter greater than 10 mm, the effect for increasing the efficiency of the subsequent drying step may be insignificant.

The drying temperature of the drying step may be about 150 to about 250 °C. If the drying temperature is less than 150°C, a drying time may be too lengthened, and the properties of the finally formed super absorbent polymer may be deteriorated, and if the drying temperature is greater than 250°C, only the surface of polymer may be dried, and thus, fine particles may be generated in the subsequent grinding process, and the properties of the finally formed super absorbent polymer may be deteriorated. Thus, preferably, the drying may be progressed at a temperature of about 150 to about 200°C, more preferably about 170 to about 200°C.

Meanwhile, the drying may be progressed for about 20 to about 90 minutes considering process efficiency, and the like, but the drying time is not limited thereto.

The drying method of the drying step is not limited as long as it is commonly used as a drying process of hydrogel polymer. Specifically, the drying may be conducted by hot air supply, infrared irradiation, microwave irradiation or UV irradiation. The moisture content of polymer after progressing such a drying step may be about 5 to about 10 wt%.

Next, the dried polymer obtained through the drying step is ground. Wherein, it may be ground to powders comprising particles having particle diameters of about 150 to about 850μm. As a grinder used to grind to such a particle diameter, specifically, a pin mill, a hammer mill, a screw mill, a roll mill, a disc mill, a jog mill, and the like may be used, but the present disclosure is not limited thereto.

Further, in order to manage the properties of super absorbent polymer powders finally productized after the grinding step, the base resin obtained after grinding is classified according to particle diameter. Preferably, polymers having particle diameter of about 150 to about 850μm are classified, and only the base resin having such particle diameter may be subjected to a surface crosslinking reaction step. Wherein, the particle diameter may be measured according to European Disposables and Nonwovens Association (EDANA) standard EDANA WSP 220.3.

**(Step 4)**

Next, a surface crosslinking step is conducted wherein a surface crosslink layer is formed on the surface of the base resin, in the presence of a surface crosslinking solution comprising a surface crosslinking agent, water, and an organic solvent having a boiling point less than 90°C.

Through this step, on at least a part of the surface of the base resin, more specifically, on at least a part of the surface of each base resin particle, a surface crosslink layer is formed.

The surface crosslinking is a step of increasing a crosslinking density around the surfaces of base resin particles in relation to the crosslinking density of the inside of particles. In general, a surface crosslinking agent is spread on the surfaces of super absorbent polymer particles. Thus, this reaction occurs on the surfaces of base resin particles, and improves crosslinkability on the surfaces of particles, without substantially influencing the inside of the particles. Thus, surface-crosslinked super absorbent polymer particles have higher crosslinking density around the surfaces than inside.

As the surface crosslinking agent, epoxy-based surface crosslinking agents comprising two or more epoxy groups in the molecule may be used. For example, as the surface crosslinking agent, one or more selected from the group consisting of ethyleneglycol diglycidyl ether, polyethyleneglycol diglycidyl ether (the number of ethyleneglycol repeat unit 2~22), propyleneglycol diglycidyl ether, polypropyleneglycol diglycidyl ether (the number of propyleneglycol repeat unit 2~66), glycerol polyglycidyl ether, diglycerol polyglycidylether, polyglycerol polyglycidylether (the number of glycerol repeat unit 2~3), and sorbitol polyglycidylether may be used.

According to one embodiment, the surface crosslinking agent may be the same as the internal crosslinking agent. For example, the surface crosslinking agent may include ethyleneglycol diglycidyl ether. Since the ethyleneglycol diglycidyl ether is highly water-soluble and has two epoxy groups, a surface reaction may be easily progressed even at relatively low temperature.

The content of the surface crosslinking agent may be appropriately selected according to the kind of a surface crosslinking agent or reaction conditions, but it may be about 0.001 to about 5 parts by weight, preferably about 0.01 to about 3 parts by weight, more preferably about 0.03 to about 2 parts by weight, based on 100 parts by weight of base resin. If the content of the surface crosslinking agent is too small, a surface crosslinking reaction may hardly occur, and if it is greater than 5 parts by weight based on 100 parts by weight of base resin, due to excessive progression of surface crosslinking reaction, absorption properties such as water retention capacity may be deteriorated.

In the present disclosure, the surface crosslinking agent is spread on the base resin in the form of a surface crosslinking solution dissolved in a solvent. In case the surface crosslinking agent is added in the form of a solution, the surface crosslinking agent may be more uniformly dispersed on the base resin.

Particularly, in the present disclosure, water and an organic solvent having a boiling point less than 90°C are used as the solvents of the surface crosslinking solution, wherein by controlling the weight ratio of water/organic solvent to 1.0 or more to less than 3.0, spread efficiency of the surface crosslinking solution is increased, thus preparing super absorbent polymer simultaneously meeting the above explained properties of i) to v).

As such, in case an organic solvent having a boiling point less than 90°C (hereinafter, referred to as 'organic solvent') is used together with water, after the surface crosslinking solution is spread on the surface of the base resin, the organic solvent having lower boiling point than water is first evaporated, and then, the water and surface crosslinking agent may penetrate deeply inside the base resin, thereby forming a deeper and more uniform surface crosslink layer.

As the organic solvent, for example, one or more selected from the group consisting of methanol, ethanol, isopropanol, acetone, and ethyl acetate may be used.

Preferably, as the organic solvent, ethanol and/or isopropanol, more preferably isopropanol may be used.

Isopropanol has little toxicity and smell, and a surface crosslinking solution comprising isopropanol may be absorbed on the surface of base resin at appropriate speed, and thus, isopropanol is preferable. Namely, in case the surface crosslinking solution is absorbed on the surface of base resin too quickly, the solution may not be uniformly spread, but when isopropanol is used, the surface crosslinking solution is absorbed to the base resin at appropriate speed, and thus, may be more uniformly spread on the surface of the base resin.

Wherein, by meeting the weight ratio of water/organic solvent being 1.0 or more to less than 3.0 and the content of the organic solvent based on the total weight of the surface crosslinking solution being 24 wt% or more, spread efficiency of the surface crosslinking solution may be increased, thereby preparing super absorbent polymer simultaneously meeting the above-explained properties of i) to v).

If the weight ratio of water/organic solvent is 3.0 or more, the surface crosslinking solution may not be uniformly spread on the base resin. Thus, in this case, surface crosslinking degree of each base resin particle may be different, and thus, uniform absorption property may not be realized, and besides, in the surface crosslinking process, aggregation chain tailings produced by the agglomeration of base resin having particle size greater than 850 $\mu$m may be excessively generated, and thus, the process may not be smoothly progressed, causing a productivity problem.

Thus, preferably, the weight ratio of water/organic solvent of the surface crosslinking solution may be 2.9 or less, or 2.8 or less, or 2.7 or less, and 1.2 or more, or 1.7 or more, or 2.3 or more. If the ratio of water in the solvent of the surface crosslinking solution is too low, a surface crosslink layer produced may be thin, and thus, when the super absorbent polymer is swollen, the surface may be cracked. Further, if the ratio of organic solvent in the solvent of the surface crosslinking solution is too high, a large amount of the organic solvent may remain in the super absorbent polymer, which is not preferable.

Further, the content of the organic solvent may be 24 wt% or more, 25 wt% or more, or 25.9 wt% or more, and 40 wt% or less, or 35 wt% or less, or 30 wt% or less, based on the total weight of the surface crosslinking solution. If the content of the organic solvent is less than 24 wt%, spread efficiency of the surface crosslinking solution may be lowered, and if it is greater than 40 wt%, the organic solvent may remain in the prepared super absorbent polymer, and thus, it is preferable to meet the above range.

Meanwhile, the surface crosslinking solution may further comprise additives to further increase spread efficiency of the solution. For example, as the additives, one or more glycol-based compounds selected from the group consisting of propyleneglycol, dipropyleneglycol, tripropyleneglycol, and glycerin; and/or polycarboxylic acid-based copolymer may be used. Preferably, as the additives, polypropyleneglycol and polycarboxylic acid-based copolymer may be used. Polypropyleneglycol and polycarboxylic acid-based copolymer are not toxic, and do not induce unpleasant smell after preparation, and thus, may be more suitably used.

The additives may be used in the content of 15 wt% or less, or 12 wt% or less, and 1 wt% or more, or 2 wt% or more, or 3 wt% or more, based on the total weight of the surface crosslinking solution.

Specifically, the glycol-based compound may be used in the content of 1 wt% or more, or 2 wt% or more, or 3 wt% or more, and 10 wt% or less, or 9 wt% or less, in the surface crosslinking solution. Further, the polycarboxylic acid-based copolymer may be used in the content of 0.05 wt% or more, or 0.1 wt% or more, and 1 wt% or less, or 0.5 wt% or less, in the surface crosslinking solution.

Further, it is preferable that the surface crosslinking solution has a density of a surface crosslinking agent represented by the following Formula 3, of 1.0 or more to less than 17.0:

$$\text{Density of surface crosslinking agent} = (\text{weight of surface crosslinking agent})/(\text{weight of water}) * 1{,}000 \qquad \text{[Formula 3]}$$

If the density of the surface crosslinking agent is less than 1.0, the amount of the surface crosslinking agent is not sufficient, and thus, it may be difficult to achieve appropriate surface crosslinking degree. Further, if the density of the surface crosslinking agent is 17.0 or more, crosslinking density may become too high, and thus, when the super absorbent polymer is swollen to the maximum, the surface-crosslinked surface may be cracked, and base resin inside may be exposed. Thus, it is preferable that the density of the surface crosslinking agent meets the above range, and it is more preferable that the density of the surface crosslinking agent meets 2.0 or more, or 3.0 or more, or 4.0 or more, and 15.0 or less, or 12.0 or less, or 9.0 or less, or 6.0 or less.

Meanwhile, the surface crosslinking solution may further comprise multivalent metal salts, for example, aluminum salts, more specifically, one or more selected from the group consisting of sulfate, potassium salt, ammonium salt, sodium salt and hydrochloride of aluminum.

In case such a multivalent metal salt is additionally used, permeability of super absorbent polymer may be further improved. The multivalent metal salt may be used, for example, in the content of 0.01 to 4 parts by weight, based on 100 parts by weight of the base resin.

A temperature rise means for the surface crosslinking reaction is not specifically limited. A heat transfer medium may be supplied, or a heat source may be directly supplied for heating. Wherein, as the kind of heat transfer media that can be used, temperature-increased fluids such as steam, hot air, hot oil, and the like may be used, but the present disclosure is not limited thereto, and the temperature of heat transfer medium supplied may be appropriately selected considering the means of heat transfer medium, temperature rise means, and target temperature. Meanwhile, as the heat source directly supplied, electric heating, and gas heating may be mentioned, but the present disclosure is not limited thereto.

The surface crosslinking reaction may be conducted at atmospheric pressure (760 ± 50 torr), and the reaction temperature may be 100 °C or more, or 110 °C or more, or 120 °C or more, and less than 160 °C, or 150 °C or less, or 140 °C or less, or 130 °C or less. If the reaction temperature is less than 100 °C, the reaction may not smoothly occur, and if it is 160 °C or more, a glycol-based compound used to increase spread efficiency of the surface crosslinking solution may cause a crosslinking reaction, and thus, the aimed effect cannot be achieved.

In case a surface crosslinking step is progressed using a surface crosslinking solution meeting the weight ratio of water/organic solvent as explained above, the surface crosslinking solution may be uniformly spread on the base resin at appropriate concentration, and thus, base resin may not be agglomerated with each other, and the surface of each base resin particle may be uniformly crosslinked. Thus, the amount of tailings produced after the crosslinking step may be 4.0 wt% or less, or 3.0 wt% or less, or 2.8 wt% or less.

Meanwhile, after forming a surface crosslink layer on the surface of base resin as explained above, inorganic substance may be additionally mixed.

As the inorganic substance, for example, one or more selected from the group consisting of silica, clay, alumina, silica-alumina composite, and titania may be used, and preferably, silica may be used.

Such inorganic substance may be used in the content of 0.01 parts by weight or more, or 0.05 parts by weight or more, or 0.1 parts by weight or more, and 5 parts by weight or less, or 3 parts by weight or less, or 1 part by weight or less, based on 100 parts by weight of the super absorbent polymer.

Meanwhile, in order to manage the properties of the finally productized super absorbent polymer, super absorbent polymer obtained after the surface crosslinking reaction may be classified according to particle size. Preferably, by classifying polymers having particle diameters of about 150 to about 850 μm, only the super absorbent polymer having such particle diameters may be made as the final product.

Through the above-explained preparation method, super absorbent polymer having small difference between internal crosslinking density and surface crosslinking density may be provided. When such super absorbent polymer absorbs moisture, the surface may swell properly, and thus, centrifuge retention capacity and absorption under pressure may be simultaneously improved, and furthermore, super absorbent polymer having high absorption speed may be provided. Thus, the super absorbent polymer may simultaneously meet i) centrifuge retention capacity, ii) absorption under pressure, iii) vortex time, iv) 1 min tap water free absorbency, and v) rewet property, as explained above.

The present disclosure will be explained in more detail in the following examples. However, the following examples are presented only as the illustrations of the present disclosure, and are not intended to limit the present disclosure.

**<Example>**

**Example 1**

**(Step 1)** Into a 3L glass reactor equipped with an agitator and a thermometer, 100 g of acrylic acid, 0.001 g of PEGDA 400 (polyethyleneglycol diacrylate, Mw=400) and 0.18 g of ethyleneglycol diglycidyl ether (EJ1030s) as internal crosslinking agents, 0.008 g of diphenhyl(2,4,6-trimethylbenzoyl)-phosphine oxide (I-819) as a photopolymerization initiator, and 0.12 g of sodium persulfate (SPS) as a thermal polymerization initiator were added and dissolved, and then, 188 g of 22% sodium hydroxide solution was added to prepare a monomer composition (neutralization degree: 75 mol%; solid content: 43 wt%).

**(Step 2)** To the monomer composition, 0.02 g of an aqueous solution of 28% sodium dodecyl sulfate (SDS) and 0.18 g of encapsulated blowing agent F-36D (Matsumoto Co., Ltd.) were added. Thereafter, the monomer composition was fed at a speed of 500 ~ 2000 mL/min on a conveyor belt having a width of 10 cm and a length of 2 mm and rotating at a speed of 50 cm/min. Simultaneously with feeding of the monomer composition, UV was irradiated at the intensity of 10 mW/cm$^2$ to progress a polymerization reaction for 60 seconds, thus obtaining a hydrogel polymer in the form of a sheet having a moisture content of 55 wt%.

**(Step 3)** Next, based on 100 parts by weight of the acrylic acid monomers, 0.032 parts by weight of sodium metabisulfite (SMBS; Na$_2$S$_2$O$_5$, Buheung Industrial Co., Ltd.) was dissolved in 54 g of water, and then, the sodium metabisulfite aqueous solution prepared above was sprayed to the hydrogel polymer cut to a size of about 5 cm x 5 cm. It was injected into a meat chopper, and then, finely cut to obtain hydrogel particle crumbs of 1 mm to 10 mm.

Thereafter, the crumbs were dried in an oven capable of transferring air volume up and down. By flowing hot air of 190 °C or more from the lower part to the upper part for 15 minutes, and from the upper part to the lower part for 15 minutes, the crumbs were uniformly dried and the moisture content of dried body after drying became 2% or less. After drying, they were ground with a grinder, and then, classified to select those of 150 to 850 μm, thus preparing a base resin (BR).

**(Step 4)** Based on 100 g of the base resin, 7 g of water; 3 g of isopropanol (IPA) as an organic solvent; 0.035 g of ethyleneglycol diglycidyl ether (EJ1030s) as a surface crosslinking agent; and, 1.0 g of propylene glycol (PG), 0.05 g of polycarboxylic acid-based copolymer (copolymer of methoxy polyethyleneglycol monomethacrylate and methacrylic acid, GK, Mw= 40,000), and 0.04 g of aluminum sulfate (Al-S) as additives were mixed to prepare a surface crosslinking solution.

To 100 g of the above-obtained base resin, the surface crosslinking solution was sprayed and mixed, and it was put in a vessel consisting of an agitator and a double jacket, and subjected to a surface crosslinking reaction at 125°C for 35 minutes. Thereafter, the surface-treated powder was classified with a standard sieve of ASTM standard to obtain super absorbent polymer powders having particle sizes of 150 to 850μm. Thereafter, based on 100 parts by weight of the obtained resin powders, 0.15 g of fumed silica (AEROSIL® 200) was additionally mixed.

**Example 2, Example 4, Comparative Example 1, Comparative Example 4, and Comparative Example 5**

A super absorbent polymer was prepared by the same method as Example 1, except that in step 4, water, isopropanol (IPA), propyleneglycol (PG), and ethyleneglycol diglycidyl ether (EJ1030s) included in the surface crosslinking solution were respectively used in the content described in the following Table 1.

**Example 3, Comparative Example 2, and Comparative Example 3**

A base resin was prepared by the same method as steps 1 to 3 of Example 1, except that when preparing the monomer composition of step 1, 0.16 g of ethyleneglycol diglycidyl ether (EJ1030s) was used.

Thereafter, super absorbent polymer was prepared by the same method as step 4 of Example 1, except that water, isopropanol (IPA), propyleneglycol (PG), and ethyleneglycol diglycidyl ether (EJ1030s) included in the surface crosslinking solution were respectively used in the content described in the following Table 1.

In the following Table 1, the content of each component was indicated as the weight(g) based on 100 g of base resin.

[Table 1]

| weight(g) | water | IPA | PG | EJ 1030s | GK | Al-S |
|---|---|---|---|---|---|---|
| Comparati ve Example 1 | 4.5 | 1 | 0.5 | 0.08 | 0.025 | 0.04 |
| Comparati ve Example 2 | 4.5 | 1 | 0.5 | 0.08 | 0.025 | 0.04 |
| Comparati ve Example 3 | 4.95 | 1.1 | 0.55 | 0.088 | 0.0275 | 0.044 |
| Comparati ve Example 4 | 3 | 1 | 0.5 | 0.2 | 0.025 | 0.04 |
| Example 1 | 7 | 3 | 1 | 0.035 | 0.025 | 0.04 |
| Example 2 | 7 | 3 | 0.25 | 0.035 | 0.025 | 0.04 |
| Example 3 | 7.7 | 3.3 | 0.55 | 0.039 | 0.0275 | 0.044 |
| Example 4 | 8 | 3 | 0.5 | 0.035 | 0.025 | 0.04 |
| Comparati ve Example 5 | 9 | 3 | 0.5 | 0.035 | 0.025 | 0.04 |

[Table 2]

|  | Weight ratio of water/ organic solvent | Rate of organic solvent in surface crosslinking solution (wt%) | Density of surface crosslinking agent |
|---|---|---|---|
| Comparative Example 1 | 4.5 | 16.3 | 17.8 |
| Comparative Example 2 | 4.5 | 16.3 | 17.8 |
| Comparative Example 3 | 4.5 | 16.3 | 17.8 |
| Comparative Example 4 | 3.0 | 21.0 | 66.7 |
| Example 1 | 2.3 | 27.0 | 5.0 |
| Example 2 | 2.3 | 29.0 | 5.0 |
| Example 3 | 2.3 | 28.3 | 5.1 |
| Example 4 | 2.7 | 25.9 | 4.4 |
| Comparative Example 5 | 3.0 | 23.8 | 3.9 |

**Experimental Example: Measurement of properties of super absorbent polymer**

For each base resin and super absorbent polymer prepared in Examples and Comparative Examples, the properties were evaluated as follows, and as shown in the following Tables 2 and 3. Table 2 shows the properties of each base resin, and Table 3 shows the properties of super absorbent polymer obtained after surface treatment step. The properties of super absorbent polymer were measured without classification of the super absorbent polymer after preparation, and centrifuge retention capacity (CRC) and vortex time of base resin were measured for those classified with #40-50 sieves (particle sizes 300~425pm).

Unless otherwise indicated, all the processes of the following property evaluations were progressed in a constant temperature and humidity chamber ($23\pm0.5°C$, relative humidity $45\pm0.5\%$), and in order to prevent measurement error, the mean value of three measurements was designated as measurement data. Further, physiological saline or brine used in the following property evaluation means an aqueous solution of 0.9 wt% sodium chloride (NaCl).

(1) Centrifuge Retention Capacity (CRC)

For each resin, centrifuge retention capacity by absorption ratio under no load was measured according to EDANA WSP 241.3.

Specifically, super absorbent polymer $W_0(g)$ (about 0.2g) was uniformly put in an envelope made of non-woven fabric, and the envelope was sealed, and then, soaked in physiological saline at room temperature. After 30 minutes, the envelope was drained using a centrifuge under 250G for 3 minutes, and the weight of the envelope $W_2(g)$ was measured. Further, the same operation was conducted without using resin, and then, the weight at that time $W_1(g)$ was measured. Using each mass obtained, CRC(g/g) was calculated according to the following Formula.

[Formula 2]

$$CRC\ (g/g) = \{[W_2(g) - W_1(g)]/W_0(g)\} - 1$$

(2) Absorption Under Pressure (AUP)

For each resin, absorption under pressure (0.3 psi) was measured according to EDANA method WSP 242.3.

Specifically, on the bottom of a plastic cylinder with an internal diameter of 60 mm, a 400-mesh wire netting made of stainless was installed. Under room temperature and 50% humidity conditions, $W_3(g)$ (0.90 g) of super absorbent polymer was uniformly sprayed on the wire netting, and a piston having an external diameter slightly smaller than 60 mm and capable of further putting a load was placed thereon such that there is no gap between the piston and the internal wall of the cylinder and up and down movement of the piston is not hindered. At this time, the weight of the apparatus $W_4(g)$ was measured.

Inside of a petri dish having a diameter of 150 mm, a glass filter with a diameter of 90 mm and a thickness of 5 mm was placed, and physiological saline was filled to the same level with the upper surface of the glass filter. One piece of a filter paper with a diameter of 90 mm was put thereon. The above-described measurement apparatus was put on the filter paper, and liquid was absorbed under load for 1 hour. After 1 hour, the measurement apparatus was picked up, and the weight $W_5(g)$ was measured.

Using each mass obtained, absorption under load(g/g) was calculated according to the following Formula.

[Formula 3]

$$AUP(g/g) = [W_5(g) - W_4(g)]/W_3(g)$$

(3) Effective absorption capacity (EFFC, 0.3 psi)

From the CRC and 0.3 psi AUP of each super absorbent polymer calculated above, effective absorption capacity (EFFC, 0.3 psi) was calculated through the following Formula 1.

Effective absorption capacity (EFFC) = {centrifuge retention capacity (CRC) + absorption under pressure (0.3 psi) (AUP)}/2     [Formula 1]

(4) Vortex time

The vortex time of each super absorbent polymer of Examples and Comparative Examples was measured according to Japanese standard method (JIS K 7224) as follows.

① First, into a flat 100 mL beaker, 50 mL of physiological saline was injected using a 100 mL mass cylinder.
② Next, after placing the beaker at the center of a magnetic stirrer, a magnetic bar (diameter 8 mm, length 30 mm) was put into the beaker.
③ Thereafter, the stirrer was operated such that the magnetic bar stirs at 600 rpm, and the lowest part of vortex generated by stirring reach the top of the magnetic bar.
④ After confirming that the temperature of brine in the beaker became 24.0°C, a stopwatch was operated while injecting $2\pm0.01$ g of super absorbent polymer sample (particle size 300 to 600 $\mu$m), and a time until vortex disappeared and the liquid surface became completely horizontal was measured in seconds, which was designated as vortex time.

(5) Brine 2 hour rewet under pressure

① In a Petri dish having a diameter of 130 mm, 4 g of super absorbent polymer was uniformly sprayed and 100g of physiological saline was poured, and then, the dish was covered and the super absorbent polymer was swollen for 120 minutes. Separately, the weight of 20 pieces of filter papers (manufacturing company whatman, catalog No. 1004-110, pore size 20-25$\mu$m, diameter 110 mm) $W_6(g)$ was measured.
② After 120 minutes, 20 pieces of the filter papers were superimposed on the super absorbent polymer, and pressurized with a 5 kg weight having a diameter of 110 mm for 5 minutes to deliver a load of 0.75 psi.
③ After 5 minutes, the weight $W_7(g)$ of the filter paper absorbing physiological saline was measured.
④ Using each mass, the amount of physiological saline permeated in the filter paper (rewet amount, g) was calculated according to the following Formula.

[Formula 4]

$$Rewet\ amount\ (g) = W_7\ (g) - W_6\ (g)$$

(6) 1min Tap Water Free Absorbency

1 min Tap water free absorbency of each super absorbent polymer of Examples and Comparative Examples was measured.

① First, 1 g of super absorbent polymer was injected in a tea bag with a width 15 cm, and height 30 cm, and the tea bag was soaked in 2 L of tap water and swollen for 1 minute.

② Thereafter, the tea bag with a swollen super absorbent polymer was lifted out, and after 1 minute, the weight of the tap water-drained tea bag and super absorbent polymer was measured together, and then, a value obtained by subtracting the weight of the empty tea bag was designated as 1 min tap water free absorbency.

Wherein, tap water having electrical conductivity of 170 to 180 $\mu$S/cm, as measured using Orion Star A222 (Thermo Scientific company), was used.

[Table 3]

| Base resin | CRC (g/g) | Vortex time (s) |
|---|---|---|
| Comparative Example 1 | 38.0 | 36 |
| Comparative Example 2 | 40.0 | 38 |
| Comparative Example 3 | 40.0 | 38 |
| Comparative Example 4 | 38.0 | 36 |
| Example 1 | 38.0 | 36 |
| Example 2 | 38.0 | 36 |
| Example 3 | 40.0 | 37 |
| Example 4 | 38.0 | 36 |
| Comparative Example 5 | 38.0 | 36 |

[Table 4]

| Super absorbent polymer | CRC (g/g) | AUP (g/g) | EFFC, 0.3psi (g/g) | Vortex time (s) | 1min tap water free absorben cy (g) | Rewet amount (g) | Tailings (%) |
|---|---|---|---|---|---|---|---|
| Comparat ive Example 1 | 31.2 | 27.5 | 29.4 | 32 | 110 | 4.3 | 1.1 |
| Comparat ive Example 2 | 31.8 | 27.0 | 29.4 | 32 | 111 | 4.0 | 1.2 |
| Comparat ive Example 3 | 31.2 | 27.7 | 29.5 | 33 | 115 | 4.2 | 1.4 |
| Comparat ive Example 4 | 29.9 | 28.7 | 29.2 | 32 | 112 | 4.8 | 1.3 |
| Example 1 | 32.5 | 29.8 | 31.2 | 28 | 138 | 2.2 | 1.2 |
| Example 2 | 33.1 | 29.0 | 31.1 | 28 | 140 | 3.0 | 2.3 |
| Example 3 | 33.0 | 30.9 | 32.0 | 29 | 133 | 2.7 | 1.2 |
| Example 4 | 32.1 | 29.7 | 30.9 | 28 | 135 | 2.4 | 2.8 |
| Comparat ive Example 5 | 32.0 | 29.1 | 30.6 | 29 | 130 | 3.7 | 4.2 |

Referring to Table 4, it can be confirmed that the super absorbent polymers of Examples 1 to 4 exhibit rapid vortex time, and simultaneously, exhibit excellent centrifuge retention capacity and absorption under pressure, and have little rewet amount, and thus, exhibit improved rewet property, and, also have excellent 1 min tap water free absorbency.

As such, super absorbent polymer having excellent centrifuge retention capacity, vortex time, EFFC and 1min tap water free absorbency can rapidly absorb liquid, but absorbed liquid is not exuded or leaked even under pressure, and thus, when used in a diaper, and the like, it can exhibit excellent absorption performance and use feel.

**Claims**

1.    Super absorbent polymer wherein

i) centrifuge retention capacity is 30g/g or more,

ii) effective absorption capacity (EFFC, 0.3psi) calculated by the following Formula 1 is greater than 29.5g/g,

iii) vortex time by a vortex method is less than 37 seconds,

iv) 1 min tap water free absorbency is greater than 115g, said 1 min tap water free absorbency being defined as the weight of water absorbed in super absorbent polymer for 1 minute, when 1g of the super absorbent polymer is soaked in 2L of tap water and swollen for 1 minute,

v) rewet property (brine 2 hour rewet under pressure) is less than 3.7g, said rewet property being defined as the weight of water exuded from super absorbent polymer to a filer paper, after 4g of the super absorbent polymer is soaked in 100g of 0.9 wt% sodium chloride aqueous solution and swollen for 120 minutes, and then, the filter paper is put on the super absorbent polymer and pressurized with 0.75psi for 5 minutes,

$$\text{Effective absorption capacity (EFFC, 0.3psi)} = \{\text{centrifuge retention capacity(CRC)} + 0.3\text{psi absorption under pressure(AUP)}\}/2 \qquad \text{[Formula 1]}$$

2. The super absorbent polymer according to claim 1, wherein

   i) centrifuge retention capacity is 32 g/g to 40 g/g,

   ii) effective absorption capacity (EFFC) is 30 g/g to 40 g/g,

   iii) vortex time by a vortex method is 20 to 30 seconds.

3. The super absorbent polymer according to claim 1 or 2, wherein

   v) brine 2 hour rewet under pressure is 3.4g or less.

4. A method for preparing the super absorbent polymer of claim 1, comprising steps of:

   preparing a monomer composition comprising acrylic acid-based monomers having at least partially neutralized acid groups, an internal crosslinking agent, and a polymerization initiator;

   subjecting the monomer composition to crosslinking polymerization to form hydrogel polymer;

   drying, grinding and classifying the hydrogel polymer to form base resin; and

   forming a surface crosslink layer on the surface of the base resin, in the presence of a surface crosslinking solution comprising a surface crosslinking agent, water and an organic solvent having a boiling point less than 90°C,

   wherein the weight ratio of water/organic solvent of the surface crosslinking solution is 1.0 or more to less than 3.0, and

   the content of the organic solvent in the surface crosslinking solution is 24 wt% or more.

5. The method according to claim 4, wherein the content of the organic solvent in the surface crosslinking solution is 25 wt% to 30 wt%.

6. The method according to claim 4 or 5, wherein the surface crosslinking solution has a density of the surface crosslinking agent represented by the following Formula 3, of 1.0 or more to less than 17.0:

$$\text{Density of surface crosslinking agent} = (\text{weight of surface crosslinking agent})/(\text{weight of water}) * 1{,}000 \qquad \text{[Formula 3]}$$

7. The method according to any one of claims 4 to 6, wherein the organic solvent is one or more selected from the group consisting of methanol, ethanol, isopropanol, acetone, and ethyl acetate.

8. The method according to any one of claims 4 to 7, wherein the amount of tailings produced by agglomeration of base resin having particle size greater than 850 $\mu$m, after the surface crosslinking step, is less than 4.0 wt%.

9. The method according to any one of claims 4 to 8, further comprising a step of adding one or more inorganic substances selected from the group consisting of silica, clay, alumina, silica-alumina composite, and titania to the super absorbent polymer, and mixing them, after the surface crosslinking step.

10. The method according to claim 9, wherein the inorganic substances are added in the amount of 0.01 parts by weight to 5 parts by weight, based on 100 parts by weight of the super absorbent polymer.

| INTERNATIONAL SEARCH REPORT | | International application No. |
|---|---|---|
| | | **PCT/KR2023/017661** |

**A.    CLASSIFICATION OF SUBJECT MATTER**

**C08J 3/24**(2006.01)i; **C08J 3/12**(2006.01)i; **C08J 3/075**(2006.01)i; **C08J 3/20**(2006.01)i; **C08K 3/22**(2006.01)i; **C08K 3/34**(2006.01)i; **C08K 3/36**(2006.01)i; **C08L 33/00**(2006.01)i

According to International Patent Classification (IPC) or to both national classification and IPC

**B.    FIELDS SEARCHED**

Minimum documentation searched (classification system followed by classification symbols)

C08J 3/24(2006.01); C08F 20/04(2006.01); C08F 8/14(2006.01); C08J 3/12(2006.01); C08K 3/00(2006.01); C08K 5/20(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 표면 가교제(surface crosslinker), 끓는점(boiling point), 유기용매(organic solvent), 표면 가교 용액(surface crosslinking solution), 고흡수성 수지(super absorbent polymer)

**C.    DOCUMENTS CONSIDERED TO BE RELEVANT**

| Category* | Citation of document, with indication, where appropriate, of the relevant passages | Relevant to claim No. |
|---|---|---|
| Y | US 5597873 A (CHAMBERS, D. R. et al.) 28 January 1997 (1997-01-28)<br>See claims 1 and 2; column 4, line 42 - column 13, line 24; and table 1. | 1-6 |
| Y | KR 10-2017-0009546 A (LG CHEM, LTD.) 25 January 2017 (2017-01-25)<br>See claims 6-14; and paragraph [0085]. | 1-6 |
| Y | KR 10-2020-0073751 A (LG CHEM, LTD.) 24 June 2020 (2020-06-24)<br>See claims 1-4. | 6 |
| A | KR 10-2021-0038250 A (LG CHEM, LTD.) 07 April 2021 (2021-04-07)<br>See entire document. | 1-6 |
| A | KR 10-2018-0073334 A (LG CHEM, LTD. et al.) 02 July 2018 (2018-07-02)<br>See entire document. | 1-6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 February 2024** | **07 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/017661**

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **10**
because they relate to parts of the international application that do not comply with the prescribed requirements to such an extent that no meaningful international search can be carried out, specifically:

Claim 10 refers to a claim violating the manner of referring to dependent claims (PCT Rule 6.4(a)), and thus is unclear.

3. ☑ Claims Nos.: **7-9**
because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.

**PCT/KR2023/017661**

| Patent document cited in search report | | | Publication date (day/month/year) | Patent family member(s) | | | Publication date (day/month/year) |
|---|---|---|---|---|---|---|---|
| US | 5597873 | A | 28 January 1997 | CA | 2187633 | A1 | 19 October 1995 |
| | | | | CN | 1148395 | A | 23 April 1997 |
| | | | | CN | 1150218 | C | 19 May 2004 |
| | | | | EP | 0755413 | A1 | 29 January 1997 |
| | | | | JP | 10-500712 | A | 20 January 1998 |
| | | | | WO | 95-27739 | A1 | 19 October 1995 |
| KR | 10-2017-0009546 | A | 25 January 2017 | CN | 106795319 | A | 31 May 2017 |
| | | | | CN | 106795319 | B | 18 September 2018 |
| | | | | DE | 202016008645 | U1 | 22 October 2018 |
| | | | | EP | 3165564 | A1 | 10 May 2017 |
| | | | | EP | 3165564 | B1 | 20 November 2019 |
| | | | | US | 2017-0216815 | A1 | 03 August 2017 |
| | | | | WO | 2017-014400 | A1 | 26 January 2017 |
| KR | 10-2020-0073751 | A | 24 June 2020 | KR | 10-2558451 | B1 | 20 July 2023 |
| KR | 10-2021-0038250 | A | 07 April 2021 | | None | | |
| KR | 10-2018-0073334 | A | 02 July 2018 | CN | 108884236 | A | 23 November 2018 |
| | | | | CN | 108884236 | B | 09 February 2021 |
| | | | | EP | 3401354 | A1 | 14 November 2018 |
| | | | | EP | 3401354 | B1 | 08 April 2020 |
| | | | | KR | 10-2018-0073335 | A | 02 July 2018 |
| | | | | US | 10702626 | B2 | 07 July 2020 |
| | | | | US | 2019-0046682 | A1 | 14 February 2019 |
| | | | | WO | 2018-117452 | A1 | 28 June 2018 |

Form PCT/ISA/210 (patent family annex) (July 2022)

**EP 4 458 884 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220159758

- KR 1020230150812

**Non-patent literature cited in the description**

- Principle of Polymerization. Odian. Wiley, 1981, 203

- **REINHOLD SCHWALM.** UV Coatings: Basics, Recent Developments and New Application. Elsevier, 2007, 115